# EUROPEAN PATENT SPECIFICATION

(11) **EP 1 939 070 B1**
(45) Date of publication and mention of the grant of the patent: **08.07.2009**
(21) Application number: 07380387.6
(22) Date of filing: 27.12.2007
(51) Int. Cl.: B62D 5/06, F16L 55/033, F16L 55/04

(54) **Resonator for the pressure line of the servo steering system of a vehicle**
Resonator für die Drucklinie des Servolenksystems eines Fahrzeugs
Résonateur pour la ligne de pression du système de servodirection d'un véhicule

(30) Priority: 28.12.2006 ES 200602800 U
(43) Date of publication of application: 02.07.2008
(73) Proprietor: Seat, S.A., 08760 Martorell (ES)
(72) Inventor: Senserrich Martinez, Antonio, c/o Seat, S.A., 08760 Martorell (Barcelona) (ES)
(74) Representative: Carvajal y Urquijo, Isabel

(56) References cited:
- EP-A- 0 832 809
- EP-A- 1 174 634
- GB-A- 2 139 702
- US-A- 4 222 414
- US-B1- 6 234 758

## Description

### Object of the Invention

The present invention relates to a resonator of the type used in pressure lines of the servo steering system of automotive vehicles, i.e. said invention can be applied to any automobile equipped with power steering.

The object of the invention is to reduce the vibrations and consequently eliminate the noise produced in the servo steering.

The invention is thus located in the scope of automobile manufacturing.

### Background of the Invention

As is known servo steering is a device for aiding steering that uses hydraulic or mechanical energy in order to make turning the steering wheel easier so that this maneuver is more comfortable for the driver. Currently the commonly used system is electro-hydraulic and in such system an electric motor moves a pump distributing the fluid throughout the entire circuit. This circuit has one part working at a high pressure and one of the consequences of working in such conditions is the possible occurrence of vibrations and noise.

Currently the use of high pressure piping is used in order to eliminate said noise.

Noise and vibrations originate both in the steering box and in the pump. The high pressure piping is formed by a resonator divided into two parts by a restrictor. The division in two parts is due to the fact that the first part eliminates the vibrations originating in the pump and the second part the vibrations originating in the box.

The high pressure piping must be designed according to the resonance of the system and each system has a different frequency. This implies that the design in each vehicle model in turn is different. Since a standardized model is not available, the high pressure piping must be redesigned again so that it has optimum performance whenever any modification is carried out.

The design and the geometry are very complex with the consequent repercussion at the cost level.

In order to eliminate vibrations the resonance of the system must be calculated, a calculation which is usually carried out on an experimental basis, and the piping must be adapted to the calculated resonance. In order to reach this objective the piping must be designed with a minimum length and due to the available space, several bends must be made since the minimum length can end up being very large.

This geometry specific to each model makes other problems emerge. The curves which have high pressure piping make cavities (bubbles) occur implying a waste problem of the materials and at the same time generating pressure waves making the performance of entire system lower.

The US 4 222 414 A shows a resonator according to the preamble of claim 1.

### Description of the Invention

The resonator that the invention proposes fully and satisfactorily solves the problem previously set forth since it forms an independent element with its own regulation means, which can be coupled to the pressure piping of any servo steering system at any point of its path.

To that end and more specifically said resonator is formed from a flattened central body with an input connection and another output connection and with a ring-shaped configuration, a body or ring that is closed by means of two covers conveniently fixed to the central body, said covers making a packet with respective rubber sheets with an inner fabric forming the respective membranes defining between one another an elastically deformable chamber, relating the mentioned input and output of the body. While one of said membranes is inaccessible the other can be pressed by a device housed in the corresponding cover, the support point of said device being adjustable both in length and in depth in order to adjust the resonator to the frequency of the resonance of the system.

According to this conception and structuring the resonator can be installed in any vehicle model since the resonance frequency is adjustable, which allows standardizing the system.

The design problems are solved with a much simpler geometry and with structural features which are also much simpler.

The cavitation disappears since the bent parts with edges are eliminated improving both the general performance of the system and its useful life.

The global performance is also improved and costs are reduced due to standardizing and simplifying the design.

Since it is possible to arrange the device at any point of the path of the piping, great versatility is achieved.

### Description of the Drawings

To complement the description being made and for the purpose of aiding to better understand the features of the invention according to a preferred practical embodiment thereof, a set of drawings is attached as an integral part of said description in which the following has been shown with an illustrative and non-limiting character:

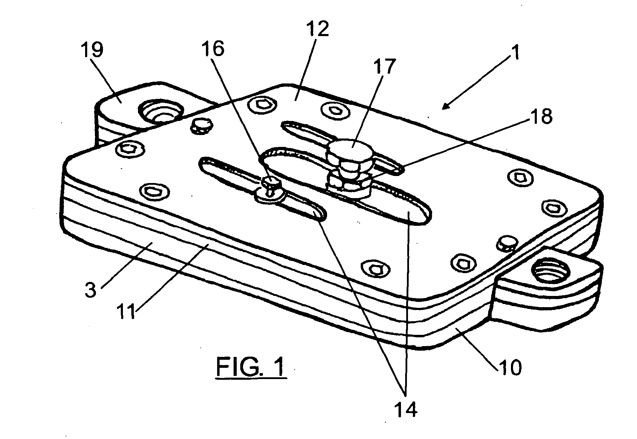

Figure 1 shows a general perspective view of a schematic representation of a resonator for the pressure line of the servo steering system of a vehicle carried out according to the object of the present invention.
Figure 2 also shows a perspective view of the resonator of the previous figure correctly assembled in the vehicle.
Figure 3 shows a plan view of the device of Figure 1.
Figure 4 shows a section view of the same device according to section line A-A of Figure 3.

### Preferred Embodiment of the Invention

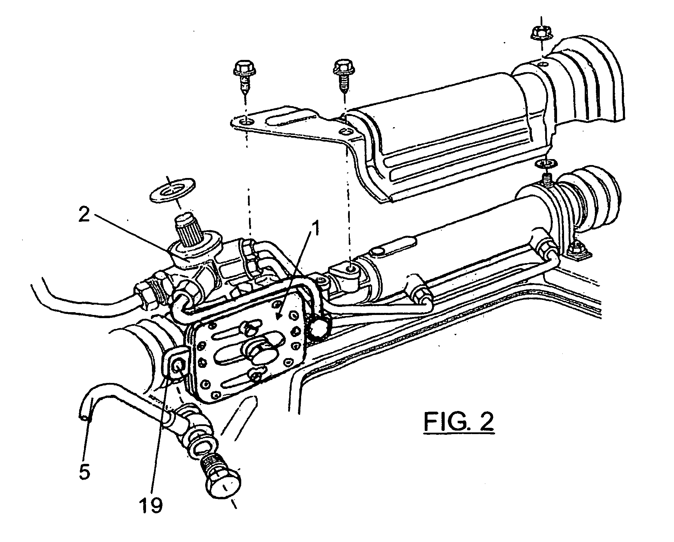

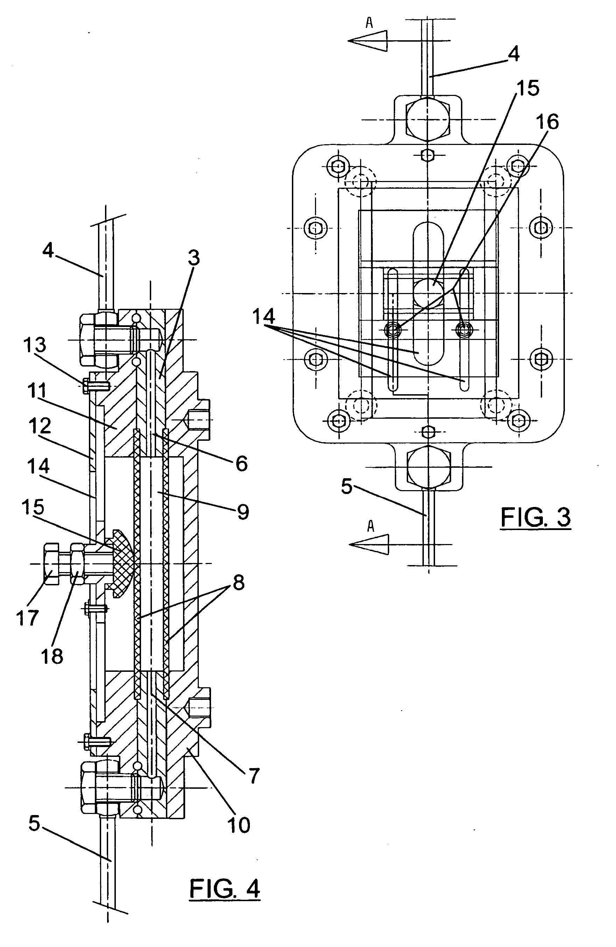

In view of the figures indicated it can be observed how the resonator (1) that the invention proposes, fixable to any suitable place of the vehicle, for example to the steering box (2), according to the assembly example of Figure 2, is formed from a central flat body (3) with a ring-shaped configuration, i.e. in the central area of which a wide cavity is provided, communicating with the input (4) and the output (5) of the circuit in which said resonator is inserted by means of respective conduits (6) and (7) traversing the body (3) as shown especially in Figure 4.

A pair of membranes (8) made from rubber sheets with an inner fabric, define between the conduits (6) and (7) a chamber (9) communicating the input (4) with the output (5), which membranes (8) are fixed to the body (1) in collaboration with the respective covers (10) and (11), conveniently screwed to the body (3).

One of these covers (10) is closed making the membrane (8) inaccessible, whereas the other cover (11) is mainly open and is closed in collaboration with a cover protector (12) in turn fixed to the cover (11) through screws (13) and provided with grooved openings or guides (14) through which a pushing device (15) intended to act on the membrane (8) closest thereto slides, such that according to which point in which said device (15) is supported on the membrane (8) and furthermore according to the pressure or deformation exerted thereon, the total absorption of the vibrations between the pump and the box for the respective resonance frequencies will thus be obtained.

This pressure device (15) is assembled on the cover protector (12) through screws (16) moving in the mentioned grooves (14) and the depth position of the pressure device (15) is regulated by means of a screw (17) assisted by a locking safety nut (18).

Thus whatever the resonance frequency is in the pressure line of the servo steering system of the vehicle, according to the type of vehicle, there will always be a position for the pressure device (15) with regard to the membrane (8) closest thereto, which will absorb said frequency eliminating both the vibrations and the noise and in both the steering box and in the pump.

Finally, it only remains to be pointed out that the device will be fixed to the steering box of the vehicle or to any other suitable point of the path of the pressure piping of the servo steering system, with the collaboration of silent-blocks (19), as shown in Figure 2.

## Claims

1. A resonator for the pressure line of the servo steering system of a vehicle, to be inserted in any point of the hydraulic circuit of said servo steering regardless of the type of vehicle, **characterized in that** it is formed from a flat body (3) provided with a wide central window and in which a pair of conduits (6-7) is provided communicating the input (4) and the output (5) of fluid with said window which is closed by means of two elastic membranes (8) making it a variable volume chamber (9), said membranes being fixed to the central body with the collaboration of a pair of lateral covers (10 and 11) conveniently screwed to the body (3) and holding the perimeter area of the membranes against this body, with the particularity that while one of said covers is closed the corresponding membrane is accessed through the other by a positioning pushing device (15) adjustable both longitudinally and in the sense of the approach regarding the membrane, so that the configuration of said chamber is adjusted to the resonance frequency of the circuit.

2. A resonator for the pressure line of the servo steering system of a vehicle according to claim 1, **characterized in that** the cover on which the pressure device is located is mainly open and a cover protector (12) is located thereon, conveniently screwed thereto, provided with grooved openings (14) acting as a guide for moving longitudinally and fixing the pushing device (15), which is located in correspondence with the inner end of an axially movable screw (17), aided by a safety nut (18) for the stable fixing thereof.

3. A resonator for the pressure line of the servo steering system of a vehicle according to the previous claims, **characterized in that** it incorporates silent-blocks (19) for the fixing thereof to any suitable place of the vehicle such as to the steering box (2) for example.

## Patentansprüche

1. Resonator für die Druckleitung des Servolenkungssystems eines Fahrzeugs, der ungeachtet des Fahrzeugtyps an einem Punkt des Hydraulikkreises des Servolenkungssystems eingefügt wird, **dadurch gekennzeichnet, dass** er aus einem flachen Körper (3) besteht, der mit einem breiten zentralen Fenster versehen ist, und in welchem ein Leitungspaar (6-7) vorgesehen ist, das den Fluideinlass (4) und den Fluidauslass (5) mit diesem Fenster verbindet, das durch zwei elastische Membranen (8) verschlossen ist, wodurch es zu einer Kammer (9) mit variablem Volumen wird, wobei diese Membranen durch das Zusammenwirken eines Paars seitlicher Abdeckungen (10 und 11) am zentralen Körper befestigt sind, die auf geeignete Weise an den Körper (3) geschraubt sind und den Umfangsbereich der Membranen gegen den Körper halten, mit der Besonderheit, dass, während eine der Abdeckungen geschlossen ist, durch die andere hindurch mithilfe einer Schubvorrichtung (15), die sowohl in der Längsrichtung als auch zur Membran hin verstellbar ist, auf die entsprechende Membran zugegriffen wird, wodurch die Konfiguration dieser Kammer an die Resonanzfrequenz des Kreises angepasst wird.

2. Resonator für die Druckleitung des Servolenkungssystems eines Fahrzeugs nach Anspruch 1, **dadurch gekennzeichnet, dass** die Abdeckung, an welcher die Druckvorrichtung liegt, im Wesentlichen offen ist und ein Abdeckungsschutz (12) darauf angeordnet ist, der auf geeignete Weise daran geschraubt ist, versehen mit gerillten Öffnungen (14), die als Führung für die Längsbewegung wirken und die Schubvorrichtung (15), die dem inneren Ende einer axial beweglichen Schraube (17) gegenüberliegt, befestigen, unterstützt von einer Sicherheitsmutter (18) zu deren stabilen Befestigung.

3. Resonator für die Druckleitung des Servolenkungssystems eines Fahrzeugs nach einem der vorherigen Ansprüche, **dadurch gekennzeichnet, dass** er Gummilager (19) zu seiner Befestigung an jeder geeigneten Stelle des Fahrzeugs wie zum Beispiel an das Lenkungsgehäuse (2) einschließt.

## Revendications

1. Résonateur pour la ligne de pression du système de servodirection d'un véhicule, à insérer à n'importe quel point du circuit hydraulique de ladite servodirection indépendamment du type de véhicule, **caractérisé en ce qu'**il est formé d'un corps plan (3) muni d'une fenêtre centrale large et dans lequel est disposée en paire de conduits (6, 7) pour faire communiquer l'admission (4) et la sortie (5) de fluide avec ladite fenêtre qui est fermée au moyen de deux membranes élastiques (8) qui en font une chambre à volume variable (9), lesdites membranes étant fixées au corps central avec la coopération d'une paire de couvercles latéraux (10 et 11) vissés sur le corps (3) de manière appropriée et retenant la zone périphérique des membranes contre ledit corps, et **caractérisé en ce que** quand un desdits couvercles est fermé il est possible d'accéder à la membrane correspondante à travers l'autre par un dispositif de positionnement par poussée (15) réglable à la fois dans le sens longitudinal et dans le sens de l'approche vers la membrane, de sorte que la configuration de ladite chambre est ajustée sur la fréquence de résonance du circuit.

2. Résonateur pour la ligne de pression du système de servodirection d'un véhicule selon la revendication 1, **caractérisé en ce que** le couvercle sur lequel le dispositif de pression est disposé est principalement ouvert et un élément de protection de couvercle (12) est disposé sur celui-ci, vissé sur celui-ci de manière appropriée, et muni d'ouvertures rainurées (14) fonctionnant comme des guides pour le déplacement longitudinal et la fixation du dispositif de poussée (15) qui est positionné de manière correspondante à l'extrémité interne d'une vis (17) mobile dans le sens axial, avec l'assistance d'un écrou de sûreté (18) pour la fixation stable de celle-ci.

3. Résonateur pour la ligne de pression du système de servodirection d'un véhicule selon les revendications précédentes, **caractérisé en ce qu'**il intègre des silentblocs (19) pour sa fixation à n'importe quel endroit approprié du véhicule tel que le boîtier de direction (2), par exemple.
